# EUROPEAN PATENT SPECIFICATION

(11) **EP 2 126 863 B1**
(45) Date of publication and mention of the grant of the patent: **08.04.2015**
(21) Application number: 07736648.2
(22) Date of filing: 26.02.2007
(51) Int. Cl.: G08B 13/16, G01S 15/52, B60R 25/10

(54) **METHOD AND DEVICE FOR DETECTION OF INTRUSIONS IN CLOSED VOLUMES, IN PARTICULAR FOR PASSENGER COMPARTMENTS OF VEHICLES**
VERFAHREN UND EINRICHTUNG ZUR ERKENNUNG VON EINDRINGEN IN GESCHLOSSENE VOLUMEN INSBESONDERE FÜR PASSAGIERKABINEN VON FAHRZEUGEN
MÉTHODE DE DÉTECTION D'INTRUSIONS DANS DES VOLUMES CLOS, EN PARTICULIER DES HABITACLES DE VÉHICULES

(43) Date of publication of application: 02.12.2009
(73) Proprietor: Cobra Automotive Technologies S.P.A., 21100 Varese (IT)
(72) Inventor: VEDANI, Carlo, I-21100 VARESE (IT)
(74) Representative: Tansini, Elio Fabrizio
(86) International application number: PCT/IT2007/000135
(87) International publication number: WO 2008/105002

(56) References cited:
- FR-A1- 2 807 843
- US-A- 6 057 760
- US-B1- 6 331 964

## Description

The present invention relates to a method of detecting intrusions in closed volumes, in particular for passenger compartments of vehicles.

The present invention also relates to a device intended for carrying out said method.

It is known that different systems for detecting intrusions in the passenger compartments of vehicles, in particular motor-vehicles, are presently available on the market.

These systems generally contemplate radiation emission two a predetermined frequency (e.g. in the ultrasonic wave range) and subsequent detection of the radiation reflected by the elements constituting the volume or space to be monitored.

The reflected radiation is then suitably processed and, if the physical characteristics of this radiation are someway altered relative to predetermined pre-set values representative of standard "non-intrusion" conditions of the closed volume, then an alarm signal is generated aimed at warning the vehicle's proprietor and/or the personnel in charge of security.

A type of analysis that can be carried out on the reflected wave substantially consists in a coherent phase demodulation, supplying two signals that are shifted 90° out of phase from each other (as described in the United States Patent No. 6, 057, 760, for example).

Of the two wattless components, both the amplitude for a first individualisation of a possible intrusion situation and the time evolution are evaluated, to determine behaviour of the vector defined by said two components and evaluate the course thereof in the complex plane, so as to confirm occurrence of intrusion or not as a function of the number of revolutions carried out by said vector in the complex space in a predetermined time interval.

It is to be noted that the two wattless components are obtained by multiplying the reflected signal by two substantially equal signals, shifted 90° out of phase with respect to each other and both having the same frequency of the initially generated signal.

Taking into account the fact that the frequency of the starting signal can be in the order of 40 kHz, it is apparent that a method like that described above is very expensive both in terms of required power and in terms of hardware circuitry used to perform the analysis.

In fact, for being able to manage three signals at frequencies in the order of tens of kHz substantially simultaneously, it is necessary for the processor used to be able to operate to some speed; in addition, since a high-frequency operation involves a corresponding current input, this type of operations are very expensive from the point of view of energy consumption.

In US 6057760 in accordance with the method, the received signal is quadrature demodulated by mixing it with two signals with a relative phase difference of pi /2 and having the same frequency as the emitted carrier, the absolute value of each of the demodulated signals of each pair of signals obtained is compared to a respective threshold to determine valid pairs if the absolute value of at least one of the two demodulated signals is higher than the threshold and invalid pairs otherwise and the number of successive rotations of the vector whose coordinates correspond to the values of the signals of the successive valid pairs is counted. For each invalid pair the value of the count is progressively reduced. The alarm is tripped if the value of the count reaches a given threshold.

In US 6331964 A method and an apparatus is disclosed for controlling electrical loads as a function of displacement detection of objects within a monitored zone by utilizing the non-Doppler shifted component of an electromagnetic, acoustic, microwave, infrared, or optical field. In the case of an ultrasonic field, a transmitter generates an ultrasonic transmission frequency into a zone to be monitored. Information is extracted from the spatial and temporal variation of the amplitude and/or phase of the total ultrasonic field at the original (i.e. non-Doppler shifted) frequency of transmission. At a detection stage, after filtering all Doppler returns, the signal received from each of a plurality of receivers/transducers, if not already digital, is digitized and passed to a gate array, microprocessor, or similar processing means where amplitude and/or phase changes are demodulated to control one or more electrical loads, for example, lighting, alarms, A/C according to an embedded algorithm within the processor. These algorithms can process the input signal to self-calibrate the system, may be adaptive, and can incorporate learning by experience features. Artificial intelligence techniques employing expert systems incorporating certainty factors and/or fuzzy logic systems can be employed to construct truly intelligent sensors. Furthermore, any variants of this new type of detector can be combined with each other or with prior art motion detectors or occupancy sensors to form a multi-technology system which minimizes the deficiencies of any single technology.

In FR 2807843, the arrangement includes a unit, which emits an acoustic signal of a certain predetermined frequency, and a receiver in the boot for detecting the reflected signal. There is an analysis unit, which analyses the reflected acoustic signal to determine the presence of a person or animal in the boot.

Accordingly, the present invention aims at making available a method and a device capable of detecting intrusions in a reliable manner while at the same time reducing the energy consumption for processing of the different signals used.

Another aim of the invention is to provided a method and a device that, without reducing the reliability of the process for detecting intrusions, can also utilise a processing unit having a lower computational capacity as compared with those required in the systems made available by the state of the art.

It is a further aim to reduce the risk of cross-talks between the different signals that are processed in accordance with the method and device of the invention.

An auxiliary aim of the invention is to further reduce power consumption, minimising use of the available hardware depending on the characteristics of the detected signals.

The foregoing and still further aims are substantially achieved by a method and a device for detection of intrusions in closed volumes, in particular for passenger compartments of vehicles in accordance with the features recited in the appended claims.

Further features and advantages will become more apparent from the detailed description of a preferred embodiment of a method and an apparatus in accordance with the invention. This description is provided with reference to the accompanying drawings given by way of non-limiting example, in which:
- Fig. 1 shows a block diagram of a device in accordance with the invention;
- Fig. 2 is an alternative embodiment of the device shown in Fig. 1; and
- Fig. 3 shows the time course of signals that can be used in the device and method of the invention.

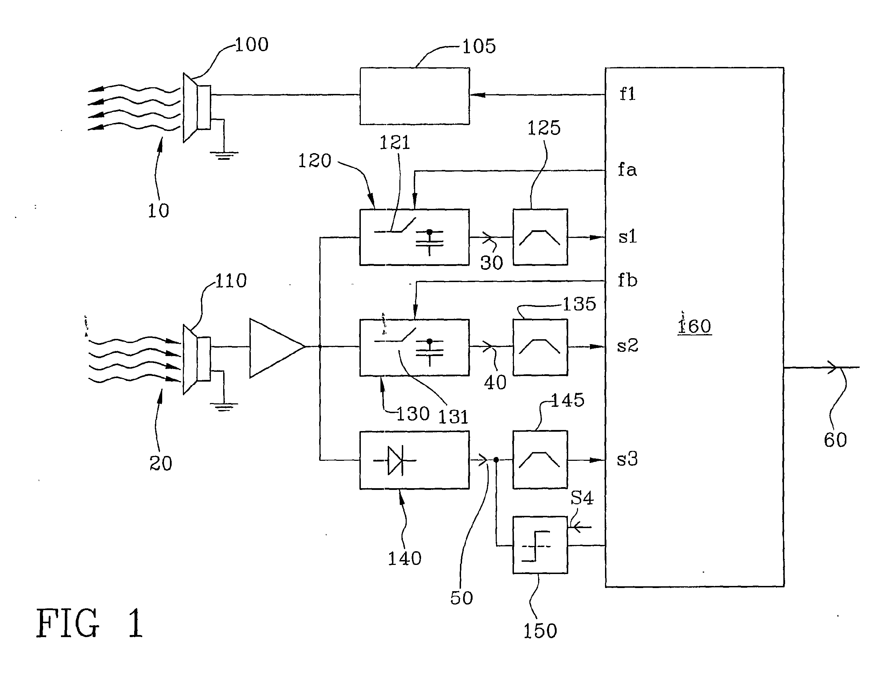

With reference to Fig. 1, a device in accordance with the invention through which the method of the present invention is put into practice is generally identified with reference numeral 1.

The method of the invention first of all comprises a step of generating a main signal 10 at a main frequency f1, propagation of which in a predetermined space is caused.

The main signal 10 preferably is an ultrasonic radiation of a frequency that can be included between 20 kHz and 60 kHz. In particular, the main signal 10 can have a frequency of 40 kHz.

Propagation of the main signal 10 is caused in the space, typically a closed volume, in which detection of possible intrusions is carried out.

Preferably the main signal 10 is not emitted continuously but periodically, the period being in particular included between 100 ms and 300 ms and each pulse having a duration included between 30 ms and 100 ms.

As mentioned above, this closed volume can be the passenger compartment of a vehicle, and in particular the passenger compartment of a motor-vehicle.

The main signal 10, in the absence of intrusions or cross-talks, creates a stationary field inside the space to be monitored.

As better clarified in the following, in case of intrusions, disturbances in said stationary field will be caused that will be conveniently detected so as to notify the vehicle's proprietor in a suitable manner and/or the staff charged with monitoring of same.

Different techniques can be used for generation of the main signal 10.

A first mode consists in generating a signal, by a processor for example, at the desired main frequency f1, said signal being directed to a suitable device for propagation of the main signal 10 (in this connection see Fig. 1).

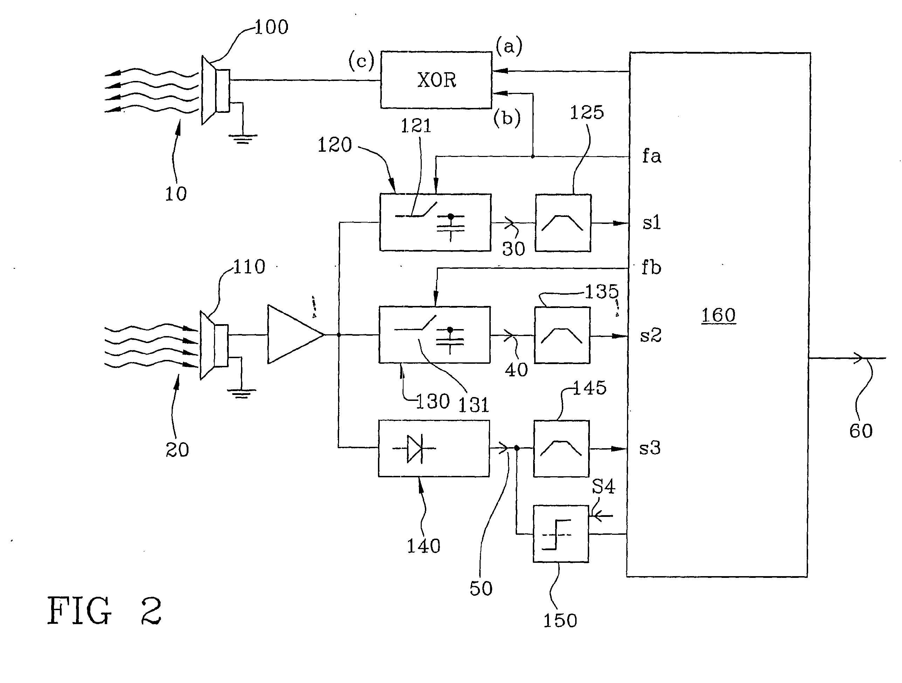

Alternatively, at least two secondary signals can be generated, both of them being at a lower frequency than the main frequency f1, and the same can be combined to obtain the signal at the main frequency f1 to be sent to the device suitable for propagation of the main signal 10 (Fig. 2).

Preferably, the secondary signals are out of phase with respect to each other by a non-zero phase displacement and the secondary signals can have the same frequency, for example.

In one embodiment of the invention, at least one of the secondary signals has a frequency corresponding to half the main frequency f1 and preferably all secondary signals have a frequency corresponding to half the main frequency f1.

The step of combining the secondary signals with each other can be carried out by performing a logic exclusive-OR operation; by giving the suitable dimension to the frequencies and phase displacements of the secondary signals, it is therefore possible to obtain a signal having the same frequency as the main frequency f1.

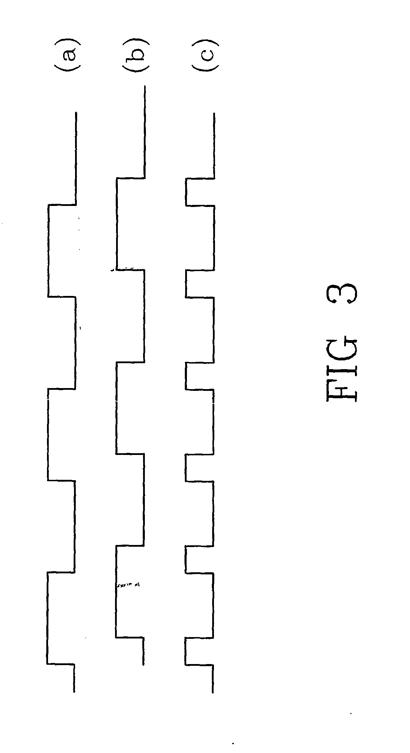

Shown in Fig. 3 by way of example is the time course of two secondary signals (a) and (b) having a frequency corresponding to half the main frequency f1 and suitably out of phase with respect to each other, together with the time course (c) of the signal resulting from the exclusive-OR combination (the last-mentioned signal having the same frequency as the main frequency f1) .

It is to be noted that this second technique for generation of the main signal 10 can be advantageously employed also in a manner independent of the other technical characteristics shown in the present specification such as use of a lower frequency than the main frequency f1 for phase demodulation of the auxiliary signal 20, for example.

The method in accordance with the invention further contemplates a step of detecting an auxiliary signal 20, obtained by interaction between the main signal 10 and said space or closed volume.

Practically, upon generation and propagation of the main signal 10, detection of signal 20 occurs which is obtained, through reflection or diffraction for example, by the interaction between the main signal 10 and the different surfaces and objects present onboard the vehicle (e.g. seats, dashboard, inner walls of the doors, etc.).

The auxiliary signal 20 is then phase-demodulated preferably in a coherent manner, sampling the same at least at a frequency fa, fb lower than the main frequency f1 (i.e. the characteristic frequency of the main signal 10).

Preferably, the sampling frequency of the auxiliary signal 20 is a subharmonic of the main frequency f1; in other words, the first frequency f1 is a whole multiple of this sampling frequency. Following said sampling, at least one phase-demodulated signal 30, 40 is obtained.

In the preferred embodiment, the phase demodulation is carried out in such a manner as to obtain a first and a second demodulated signals 30, 40. The first demodulated signal 30 is obtained through sampling of the auxiliary signal 20 at a first frequency fa. The second demodulated signal 40 is obtained through sampling of the auxiliary signal 20 at a second frequency fb; the first and second demodulated signals 30, 40 are mutually out of phase by a predetermined phase displacement d different from zero and preferably of 90°. In other words, the first and second demodulated signals 30, 40 are two wattless signals.

It will be recognised that at least one of the first and second frequencies fa, fb is lower than the main frequency f1.

Preferably, at least one of the first and second frequencies fa, fb is a subharmonic of the main frequency f1.

In more detail, both the first and second frequencies fa, fb can be subharmonics of the main frequency f1.

For instance, the ratio of the main frequency f1 to the first and/or second frequency fa, fb is included between 1 and 10; by way of example, this ratio can be 2.

Advantageously, should the main frequency f1 of the main signal 10 be obtained from combination of said secondary signals, at least one of the first and second frequencies fa, fb can be equal to the frequency of one of said secondary signals (example shown in Fig. 2).

Therefore, it is possible that the same output of the processor designed to control generation of the main signal 10 and analysis of the auxiliary signal 20 is used both to supply one of the secondary signals utilised for generation of the main signal 10, and to demodulate the auxiliary signal 20 and obtain at least one of the first and second demodulated signals 30, 40.

In more detail, the first and second demodulated signals 30, 40 can be obtained through respective first and second sample-and-hold circuits 120, 130 to the input of which the auxiliary signal 20 is placed and which output said demodulated signals 30, 40.

The first sample-and-hold circuit 120 is activated to a frequency equal to the first frequency fa; the second sample-and-hold circuit 130 is activated to a frequency equal to the second frequency fb.

Preferably, the demodulated signals 30, 40 at the output of the sample-and-hold circuits 120, 130 are suitably filtered before being inputted to a processing. unit 160 carrying out further processing of same.

This filtering operation can be of the band-pass type, the passband being defined between 30 Hz and 500 Hz, and more preferably between 40 Hz and 400 Hz.

At least one first comparison is herein carried out between the first and second demodulated signals 30, 40 and one or more predetermined thresholds s1, s2.

Said one or more predetermined thresholds s1, s2 are representative of "non-intrusion" conditions of the monitored space.

Preferably the first comparison also comprises a comparison between the phases of the two demodulated signals 30, 40. Depending on said first comparison, an alarm signal 60 is generated, if necessary.

It is to be noted that the predetermined thresholds s1, s2 can be both individual values, under or above which the intrusion conditions are defined, and value intervals, at the inside or outside of which said intrusion conditions are defined.

Advantageously, the method in accordance with the invention involves a combination between said phase demodulation and an amplitude demodulation, above all to make identification of possible intrusions by device 1 more reliable.

It is also to be noted that a combination between a phase demodulation and an amplitude demodulation is advantageous also irrespective of the sampling frequency used for the phase demodulation; in fact, the fact by itself of carrying out a logic operation of the "AND" type between the result of the verification carried out on the phase-demodulated signal 30, 40 and the result of the verification carried out on the amplitude-demodulated signal 50 allows a much more reliable process to be obtained, in terms of correct distinction between the intrusion conditions and the non-intrusion conditions, in which temperature variations or shocks suffered by the vehicle can give rise to generation of wrong alarm signals.

The auxiliary signal 20 can be therefore amplitude-demodulated as well, thus obtaining a corresponding amplitude-demodulated signal 50.

Then a second comparison is carried out between the amplitude-demodulated signal 50 and at least one respective threshold s3; said alarm signal 60 can be generated also as a function of this second comparison.

The second comparison can be carried out, in a quite equivalent manner, with a single threshold value or with a plurality of values defining one or more intervals.

Advantageously, the alarm signal 60 is generated if both the first and second comparisons give a result stating occurrence of an intrusion in the monitored space.

On the contrary, i.e. if at least one of the two comparisons gives a negative result, the alarm signal 60 is not generated; in this way accuracy and reliability of the method are increased, since the situations in which an intrusion really occurs are distinguished in a more precise manner.

In the preferred embodiment, a preliminary analysis carried out on the amplitude-demodulated signal 50 can be employed to reduce consumptions of the circuitry implementing the method of the invention.

In fact, the processing unit 160 designed for analysis of the first and second demodulated signals 30, 40 can be normally maintained to a stand-by condition at which no operation is substantially carried out by the same.

Should the amplitude-demodulated signal 50 exceed a pre-set value s4, under which the fact that an intrusion has occurred is very unlike, then the processing unit 160 would be "awoken" and brought to an operating condition at which also the phase-demodulated signals 30, 40 are processed and the amplitude-demodulated signal 50 is further analysed to obtain possible confirmation of the preliminarily detected intrusion.

In particular, the processing unit 160 is maintained to the stand-by condition during generation of the main signal 10.

Figs. 1 and 2 show a block diagram of two possible embodiments of a device 1 in accordance with the present invention.

The above described method can be performed through said device 1.

Device 1 comprises a radiation generator 100 to generate the main signal 10 at the first frequency f1. Propagation of the main signal 10 in the predetermined closed volume, such as the driver and passenger compartment of a vehicle, is caused.

The radiation generator 100 may for example comprise an ultrasonic transducer to convert the electric signal at frequency f1 to an ultrasonic wave.

It will be recognised that, while a single generator 100 is shown in Fig. 1 by way of example, device 1 can be also equipped with a plurality of generators quite identical with generator 100. In this way the area to be monitored can be covered in a very precise and reliable manner.

By way of example, a car can be taken into account in which two generators are directed to the opposite sides of the vehicle (for instance, if the generators and respective receivers are positioned in the middle of the roof), so that each of them impinges on one half of the vehicle's driver and passenger compartment with its radiation.

Advantageously, device 1 further comprises an interface 105 interposed between the processing unit 160 and the generator. (or generators) 100. This interface is particularly useful where more than one generator is present, since it ensures the necessary insulation between the different signals sent to the different generators.

Reference is herein again made to what stated in connection with generation of the main frequency f1 of the main signal 10; this frequency can be directly generated by the processing unit 160 (Fig. 1) or can be obtained by combining at least two secondary signals of lower frequency than the main frequency f1 (Fig. 2).

Device 1 also comprises a detector 110 to detect the auxiliary signal 20 obtained by interaction between the main signal 10 and the different elements present in the space to be monitored.

Detector 110 may for instance comprise a transducer to convert the received ultrasonic signal into an electric signal.

It will be recognised that while in Fig. 1 only one detector 110 is shown by way of example, device 1 can be also equipped with a plurality of detectors quite similar to detector 110.

The different detectors can be disposed at different positions relative to each other, so as to detect the reflected radiation emissions having different directions and origins.

In a preferred embodiment, the outputs of the different detectors are added up in an analog manner so that the circuitry connected downstream (to be described in the following) can be suitably "alerted" even if one detector alone receives a radiation that can be representative of an intrusion.

Device 1 also comprises a phase demodulator 120, 130 to phase demodulate the auxiliary signal 20 preferably in a coherent manner, so as to obtain at least one corresponding phase-demodulated signal 30, 40.

In particular the phase demodulator 120, 130 carries out sampling of the auxiliary signal 20 at a frequency fa, fb that is lower, being preferably a subharmonic, than the main frequency f1. In more detail, the phase demodulator comprises a first and a second sampling modules 121, 131.

The first sampling module 121 carries out sampling, at the first frequency fa, of the auxiliary signal 20 to obtain the first demodulated signal 30. The second sampling module 131 carries out sampling, at the second frequency fb, of the auxiliary signal 20 to obtain the second demodulated signal 40.

The first and second demodulated signals 30, 40 are mutually out of phase by a non-zero phase displacement d. Preferably said phase displacement d corresponds to 90°.

In the preferred embodiment the first sampling module 121 is included in a first sample-and-hold circuit 120 receiving the auxiliary signal 20 as an input and outputting the first demodulated signal 40.

The first and second sample-and-hold circuits 120, 130 are operated at the first and second frequencies fa, fb respectively, so that the respective demodulated signals 30, 40 have the desired frequency and phase relation.

Advantageously, should the main frequency f1 of the main signal 10 be obtained by combining said secondary signals, at least one of the first and second frequencies fa, fb can be equal to the frequency of one of said secondary signals.

Therefore, one same output of the processing unit 160 can be used both to supply one of the secondary signals used for generation of the main signal 10, and to supply the respective sampling frequency fa, fb to the first and/or the second sample-and-hold circuits 120, 130, so as to demodulate the auxiliary signal 20 and obtain at least one of the first and second demodulated signals 30, 40.

Preferably device 1 is further provided with at least one filter 125 to filter the first demodulated signal. 30 before the same is inputted to the processing unit 160.

The first filter 125 can be a band-pass filter the passband of which is defined between 30 Hz and 500 Hz, and in particular between 40 Hz and 400 Hz.

Preferably device 1 is also provided with a second filter 135 to filter the second demodulated signal 40 before the same is inputted to the processing unit 160.

The second filter 135 can be a band-pass filter the passband of which is defined between 30 Hz and 500 Hz and in particular between 40 Hz and 400 Hz.

As mentioned above, the processing unit 160 is designed to carry out at least one comparison between the two wattless components 120, 130 and respective pre-stored thresholds s1, s2.

Depending on this comparison, the alarm signal 60 can be generated.

Advantageously, device 1 also comprises an amplitude demodulator 140, to amplitude-demodulate the auxiliary signal 20 so as to obtain a corresponding amplitude-demodulated signal 50.

Preferably device 1 is further provided with a third filter 145, to filter the amplitude-demodulated signal 50 before the same is inputted to the processing unit 160.

The third filter 145 can be a band-pass filter the passband of which is defined between 10 Hz and 500 Hz, and in particular between 40 Hz and 400 Hz.

The processing unit 160 is therefore operatively associated with the amplitude demodulator 140 to carry out a second comparison between the amplitude-demodulated signal 50 and at least one respective threshold s3.

The alarm signal 60 can therefore be generated also as a function of the second comparison. In other words, as above said, if both the first and second comparisons give confirmation of an occurred intrusion, then the alarm signal 60 is generated.

Preferably, the processing unit 160 is maintained to a stand-by condition when its intervention is not required. This stand-by condition is maintained both during generation and propagation of the main signal 10 and during reception of the auxiliary signal 20, until the amplitude-demodulated signal 50 overcomes a pre-stored threshold s4.

In this case, the processing unit 160 is brought to an operating condition to process the demodulated signals 30, 40, 50 and verify whether an intrusion has really occurred.

To compare the amplitude-demodulated signal 50 with said pre-stored threshold s4, device 1 is provided with an auxiliary comparison module, denoted at 150 in Fig. 1.

This auxiliary comparison module 150 can for instance be of the analog type; in this case, the pre-stored threshold can be defined by a pre-set reference voltage value.

The invention achieves important advantages.

First of all, the method and device of the invention allow power consumptions to be minimised since the processing unit is only activated when required, and operation of same takes place at reduced frequencies (i.e. speeds) as compared with systems of known type.

Another advantage resides in that, by virtue of use of different frequencies for the main signal and the signals utilised for phase demodulation, the risk of cross-talks between the different signals processed is greatly reduced and in particular the risk of cross-talks between these signals and the signal received at frequency f1 that generally is of a very low intensity.

## Claims

1. A method of detecting intrusions in closed volumes, in particular for passenger compartments of vehicles, comprising the following steps;
- generating a main signal (10) at a main frequency (f1), propagation of which is caused in a predetermined closed volume or space;
- detecting an auxiliary signal (20) obtained from interaction between the main signal (10) and said space;
- phase-demodulating said auxiliary signal (20), sampling the same at least at a frequency (fa, fb) lower than said main frequency (f1) , thus obtaining at least one corresponding demodulated signal (30, 40);
wherein said phase-demodulating said auxiliary signal (20) comprises:
• demodulating said auxiliary signal (20) at a first frequency (fa), thus obtaining a corresponding first demodulated signal (30);
• demodulating said auxiliary signal at a second frequency (fb), thus obtaining a corresponding second demodulated signal (40),
said first and second demodulated signals being mutually out of phase by a predetermined non-zero phase displacement (d), which phase displacement is preferably equal to 90°,
at least one of said first and second frequencies (fa, fb) being lower than said main frequency (f1) ;
- carrying out a first comparison of said at least one demodulated signal (30, 40) with at least one predetermined threshold (s1, s2) ;
- generating an alarm signal (60) as a function of said first comparison.

2. A method as claimed in claim 1, **characterised in that** said step of phase-demodulating of said auxiliary signal (20) is carried out in a coherent manner.

3. A method as claimed in claim 1 or 2, **characterised in that** said frequency (fa, fb) lower than said main frequency (f1) is a subharmonic of said main frequency (f1).

4. A method as claimed in any one of claims 1 or 2, **characterised in that** at least one, and preferably both, of said first and said second frequency (fa, fb) is a subharmonic of said main frequency (f1).

5. A method as claimed in any one of the preceding claims, **characterised in that** said step of generating said first demodulated signal (30) comprises the following sub-steps:
- inputting said auxiliary signal (20) to a first sample-and-hold circuit (120);
- activating said first sample-and-hold circuit to said first frequency (fa), thus obtaining said first demodulated signal (30) at said sample-and-hold circuit (120) output.

6. A method as claimed in anyone of the preceding claims, **characterised in that** said step of generating said second demodulated signal (40) comprises the following sub-steps:
- inputting said auxiliary signal (20) to a second sample-and-hold circuit (130);
- activating said second sample-and-hold circuit to said second frequency (fb), thus obtaining said second demodulated signal (40) at said sample-and-hold circuit (130) output.

7. A method as claimed in anyone of the preceding claims, **characterised in that** it further comprises the following steps:
- amplitude-demodulating said auxiliary signal (20), thus obtaining a corresponding amplitude-demodulated signal (50);
- carrying out a second comparison of said amplitude-demodulated signal (50) with at least one respective threshold (s3) ;
- generating said alarm signal (60) also as a function of said second comparison.

8. A method as claimed in claim 7, **characterised in that** it further comprises the following steps:
- carrying out an auxiliary comparison between an amplitude of the amplitude-demodulated signal (50) and at least one pre-set value (s4);
- depending on the result of said auxiliary comparison, piloting from a stand-by condition to an operating condition, a processing unit (160) designed to receive said phase-demodulated signals (30, 40) and said amplitude-demodulated signal (50) and generate said alarm signal (60).

9. A method as claimed in claim 8, **characterised in that** it further comprises a step of maintaining said processing unit (160) in the stand-by condition during generation of said main signal (10).

10. A method as claimed in anyone of the preceding claims, **characterised in that** the step of generating said main signal (10) comprises the following sub-steps:
- generating at least two secondary signals, having lower frequency than said main frequency;
- combining said secondary signals with each other to obtain a signal having the same frequency as said main frequency (f1).

11. A method as claimed in claim 10, **characterised in that** said secondary signals are out of phase with respect to each other by a non-zero phase displacement.

12. A method as claimed in claim 10 or 11, **characterised in that** at least one of said secondary signals, and preferably both said secondary signals, have a frequency equal to half the main frequency (f1).

13. A method as claimed in claim 10 when appendant to claim 5 or 6, **characterised in that** at least one of said secondary signals has the same frequency as said first and/or second frequency (fa, fb) and is used for activation of said first and/or second sample-and-hold circuit (120, 130).

14. A device for detection of intrusions in closed volumes, in particular for passenger compartments of vehicles, comprising :
- a radiation generator (100) to generate a main signal (10) at a main frequency (f1), propagation of which in a predetermined closed volume or space is caused;
- a detector (110) to detect an auxiliary signal (20) obtained by interaction between the main signal (10) and said space;
- a phase demodulator (120, 130), which is preferably coherent, to phase-demodulate said auxiliary signal (20) preferably in a coherent manner, sampling the same at a frequency (fa, fb) lower than said main frequency (f1), thus obtaining at least one corresponding demodulated signal (30, 40);
wherein said phase-demodulator is configured for:
• demodulating said auxiliary signal (20) at a first frequency (fa), thus obtaining a corresponding first demodulated signal (30);
• demodulating said auxiliary signal at a second frequency (fb), thus obtaining a corresponding second demodulated signal (40),
said first and second demodulated signals being mutually out of phase by a predetermined non-zero phase displacement (d), which phase displacement is preferably equal to 90°,
at least one of said first and second frequencies (fa, fb) being lower than said main frequency (f1) ;
- a processing unit (160) operatively associated with said demodulator (120, 130) to carry out a first comparison of said at least one demodulated signal (30,40) with at least one predetermined threshold (s1, s2) and generate an alarm signal (60) as a function of said first comparison.

15. A device as claimed in claim 14, **characterised in that** said phase demodulator (120, 130) comprises:
- a first sampling module (121) to sample said auxiliary signal (20) at a first frequency (fa) and obtain said first demodulated signal (30);
- a second sampling module (131) to sample said auxiliary signal (20) at a second frequency (fb) and obtain said second demodulated signal (40);
said first and second demodulated signals (30, 40) being out of phase with respect to each other by a non-zero phase displacement (d), which phase displacement (d) is preferably equal to 90°,
at least one of said first and second frequencies (fa, fb) being lower than said main frequency (f1).

## Patentansprüche

1. Verfahren zur Erkennung von Eindringungen in geschlossene Volumen, insbesondere für Passagierkabinen von Fahrzeugen, umfassend die folgenden Schritte:
- Erzeugung eines Hauptsignals (10) bei einer Hauptfrequenz (f1), dessen Ausbreitung in einem vorgegebenen geschlossenen Volumen oder Raum bewirkt wird;
- Erkennung eines Nebensignals (20), das aus der Interaktion zwischen dem Hauptsignal (10) und dem Raum erhalten wird;
- Phasendemodulierung des Nebensignals (20) durch Abtasten von diesem bei mindestens einer Frequenz (fa, fb), die niedriger als die Hauptfrequenz (f1) ist, wodurch mindestens ein entsprechendes demoduliertes Signal (30, 40) erhalten wird; wobei die Phasendemodulierung des Nebensignals (20) Folgendes umfasst:
• Demodulierung des Nebensignals (20) bei einer ersten Frequenz (fa), wodurch ein entsprechendes erstes demoduliertes Signal (30) erhalten wird;
• Demodulierung des Nebensignals bei einer zweiten Frequenz (fb), wodurch ein entsprechendes zweites demoduliertes Signal (40) erhalten wird,
wobei das erste und zweite demodulierte Signal durch eine vorgegebene Nicht-Null-Phasenverschiebung (d) gegenseitig außer Phase sind, wobei die Phasenverschiebung vorzugsweise 90° beträgt,
wobei mindestens eines der ersten und zweiten Frequenz (fa, fb) niedriger als die Hauptfrequenz (f1) ist;
- Durchführung eines ersten Vergleichs des mindestens einen demodulierten Signals (30, 40) mit mindestens einem vorgegebenen Schwellenwert (s1, s2);
- Erzeugung eines Alarmsignals (60) in Abhängigkeit vom ersten Vergleich.

2. Verfahren nach Anspruch 1, **dadurch gekennzeichnet, dass** der Schritt der Phasendemodulierung des Nebensignals (20) auf eine kohärente Art und Weise durchgeführt wird.

3. Verfahren nach Anspruch 1 oder 2, **dadurch gekennzeichnet, dass** die Frequenz (fa, fb), die niedriger als die Hauptfrequenz (f1) ist, eine Subharmonische der Hauptfrequenz (f1) ist.

4. Verfahren nach einem der Ansprüche 1 oder 2, **dadurch gekennzeichnet, dass** mindestens eine und vorzugsweise beide der ersten und zweiten Frequenz (fa, fb) eine Subharmonische der Hauptfrequenz (f1) ist.

5. Verfahren nach einem der vorangehenden Ansprüche, **dadurch gekennzeichnet, dass** der Schritt der Erzeugung des ersten demodulierten Signals (30) die folgenden Unterschritte umfasst:
- Eingabe des Nebensignals (20) in eine erste Abtast- und Halteschaltung (120);
- Aktivierung der ersten Abtast- und Halteschaltung bei der ersten Frequenz (fa), wodurch das erste demodulierte Signal (30) bei der Ausgabe der Abtast- und Halteschaltung (120) erhalten wird.

6. Verfahren nach einem der vorangehenden Ansprüche, **dadurch gekennzeichnet, dass** der Schritt der Erzeugung des zweiten demodulierten Signals (40) die folgenden Unterschritte umfasst:
- Eingabe des Nebensignals (20) in eine zweite Abtast- und Halteschaltung (130);
- Aktivierung der zweiten Abtast- und Halteschaltung bei der zweiten Frequenz (fb), wodurch das zweite demodulierte Signal (40) bei der Ausgabe der Abtast- und Halteschaltung (130) erhalten wird.

7. Verfahren nach einem der vorangehenden Ansprüche, **dadurch gekennzeichnet, dass** es ferner die folgenden Schritte umfasst:
- Amplitudendemodulierung des Nebensignals (20), wodurch ein entsprechendes amplitudendemoduliertes Signal (50) erhalten wird;
- Durchführung eines zweiten Vergleichs des amplitudendemodulierten Signals (50) mit mindestens einem entsprechenden Schwellenwert (s3);
- Erzeugung des Alarmsignals (60) ebenfalls in Abhängigkeit vom zweiten Vergleich.

8. Verfahren nach Anspruch 7, **dadurch gekennzeichnet, dass** es ferner die folgenden Schritte umfasst:
- Durchführung eines Nebenvergleichs zwischen einer Amplitude des amplitudendemodulierten Signals (50) und mindestens einem voreingestellten Wert (s4);
- abhängig vom Ergebnis des Nebenvergleichs die Steuerung, von einem Bereitschaftszustand in einen Betriebszustand, einer Verarbeitungseinheit (160), die zum Empfang der phasendemodulierten Signale (30, 40) und des amplitudendemodulierten Signals (50) und zur Erzeugung des Alarmsignals (60) konzipiert ist.

9. Verfahren nach Anspruch 8, **dadurch gekennzeichnet, dass** es ferner einen Schritt der Aufrechterhaltung der Verarbeitungseinheit (160) im Bereitschaftszustand während der Erzeugung des Hauptsignals (10) umfasst.

10. Verfahren nach einem der vorangehenden Ansprüche, **dadurch gekennzeichnet, dass** der Schritt der Erzeugung des Hauptsignals (10) die folgenden Unterschritte umfasst:
- Erzeugung von mindestens zwei Nebensignalen, die eine niedrigere Frequenz als die Hauptfrequenz aufweisen;
- Kombinieren der Nebensignale miteinander zum Erhalt eines Signals, das dieselbe Frequenz wie die Hauptfrequenz (f1) aufweist.

11. Verfahren nach Anspruch 10, **dadurch gekennzeichnet, dass** die Nebensignale in Bezug auf einander durch eine Nicht-Null-Phasenverschiebung außer Phase sind.

12. Verfahren nach Anspruch 10 oder 11, **dadurch gekennzeichnet, dass** mindestens eines der Nebensignale und vorzugsweise beide Nebensignale eine Frequenz aufweisen, die der Hälfte der Hauptfrequenz (f1) entspricht.

13. Verfahren nach Anspruch 10, sofern dieser von Anspruch 5 oder 6 abhängt, **dadurch gekennzeichnet, dass** mindestens eines der Nebensignale dieselbe Frequenz wie die erste und/oder zweite Frequenz (fa, fb) aufweist und zur Aktivierung der ersten und/oder zweiten Abtast- und Halteschaltung (120, 130) verwendet wird.

14. Einrichtung zur Erkennung von Eindringungen in geschlossene Volumen, insbesondere für Passagierkabinen von Fahrzeugen, umfassend:
- einen Strahlungserzeuger (100) zur Erzeugung eines Hauptsignals (10) bei einer Hauptfrequenz (f1), dessen Ausbreitung in einem vorgegebenen geschlossenen Volumen oder Raum bewirkt wird;
- einen Erkenner (110) zur Erkennung eines Nebensignals (20), das durch die Interaktion zwischen dem Hauptsignal (10) und dem Raum erhalten wird;
- einen Phasendemodulator (120, 130), der vorzugsweise kohärent ist, zur Phasendemodulierung des Nebensignals (20) vorzugsweise auf eine kohärente Art und Weise, durch Abtasten von diesem bei einer Frequenz (fa, fb), die niedriger als die Hauptfrequenz (f1) ist, wodurch mindestens ein entsprechendes demoduliertes Signal (30, 40) erhalten wird;
wobei der Phasendemodulator für folgendes konfiguriert ist:
• Demodulierung des Nebensignals (20) bei einer ersten Frequenz (fa), wodurch ein entsprechendes erstes demoduliertes Signal (30) erhalten wird;
• Demodulierung des Nebensignals bei einer zweiten Frequenz (fb), wodurch ein entsprechendes zweites demoduliertes Signal (40) erhalten wird,
wobei das erste und zweite demodulierte Signal durch eine vorgegebene Nicht-Null-Phasenverschiebung (d) gegenseitig außer Phase sind, wobei die Phasenverschiebung vorzugsweise 90° beträgt,
wobei mindestens eines der ersten und zweiten Frequenz (fa, fb) niedriger als die Hauptfrequenz (f1) ist;
- eine Verarbeitungseinheit (160), die mit dem Demodulator (120, 130) wirkverbunden ist, um einen ersten Vergleich des mindestens einen demodulierten Signals (30, 40) mit mindestens einem vorgegebenen Schwellenwert (s1, s2) durchzuführen und in Abhängigkeit vom ersten Vergleich ein Alarmsignal (60) zu erzeugen.

15. Einrichtung nach Anspruch 14, **dadurch gekennzeichnet, dass** der Phasendemodulator (120, 130) Folgendes umfasst:
- ein erstes Abtastmodul (121) zum Abtasten des Nebensignals (20) bei einer ersten Frequenz (fa) und Erhalten des ersten demodulierten Signals (30);
- ein zweites Abtastmodul (131) zum Abtasten des Nebensignals (20) bei einer zweiten Frequenz (fb) und Erhalten des zweiten demodulierten Signals (40);
wobei das erste und zweite demodulierte Signal (30, 40) in Bezug auf einander durch eine Nicht-Null-Phasenverschiebung (d) außer Phase sind, wobei die Phasenverschiebung (d) vorzugsweise 90° beträgt,
wobei mindestens eines der ersten und zweiten Frequenz (fa, fb) niedriger als die Hauptfrequenz (f1) ist.

## Revendications

1. Méthode de détection d'intrusions dans des volumes clos, en particulier des habitacles de véhicules, comprenant les étapes suivantes :
- production d'un signal principal (10) à une fréquence principale (f1), dont la propagation se fait dans un volume ou espace clos prédéterminé ;
- détection d'un signal auxiliaire (20) obtenu par interaction entre le signal principal (10) et ledit espace ;
- démodulation de la phase dudit signal auxiliaire (20) en échantillonnant ledit signal au moins à une fréquence (fa, fb) inférieure à ladite fréquence principale (f1), et par conséquent obtention d'au moins un signal démodulé correspondant (30, 40) ; dans laquelle ladite démodulation de la phase dudit signal auxiliaire (20) comprend :
• démodulation dudit signal auxiliaire (20) à une première fréquence (fa), et par conséquent obtention d'un premier signal démodulé correspondant (30) ;
• démodulation dudit signal auxiliaire à une seconde fréquence (fb), et par conséquent obtention d'un second signal démodulé correspondant (40),
lesdits premier et second signaux démodulés étant déphasés mutuellement par un déplacement de phase non-nul prédéterminé (d), dont le déplacement de phase est de préférence égal à 90°,
au moins l'une desdites première et seconde fréquences (fa, fb) étant inférieure à ladite fréquence principale (f1) ;
- exécution d'une première comparaison dudit au moins un signal démodulé (30, 40) avec au moins un seuil prédéterminé (s1, s2) ;
- production d'un signal d'alarme (60) en fonction de ladite première comparaison.

2. Méthode selon la revendication 1, **caractérisée en ce que** ladite étape de démodulation de la phase dudit signal auxiliaire (20) se fait de façon cohérente.

3. Méthode selon les revendications 1 ou 2, **caractérisée en ce que** ladite fréquence (fa, fb) inférieure à ladite fréquence principale (f1) est une sous-harmonique de ladite fréquence principale (f1).

4. Méthode selon l'une quelconque des revendications 1 ou 2, **caractérisée en ce qu'**au moins une, et de préférence les deux, desdites première et seconde fréquences (fa, fb) est une sous-harmonique de ladite fréquence principale (f1).

5. Méthode selon l'une quelconque des revendications précédentes, **caractérisée en ce que** ladite étape de production dudit premier signal démodulé (30) comprend les sous-étapes suivantes :
- passage dudit signal auxiliaire (20) dans un premier échantillonneur-bloqueur (120) ;
- activation dudit premier échantillonneur-bloqueur à ladite première fréquence (fa), et par conséquent obtention dudit premier signal démodulé (30) à la sortie dudit échantillonneur-bloqueur (120).

6. Méthode selon l'une quelconque des revendications précédentes, **caractérisée en ce que** ladite étape de production dudit second signal démodulé (40) comprend les sous-étapes suivantes :
- passage dudit signal auxiliaire (20) dans un second échantillonneur-bloqueur (130) ;
- activation dudit second échantillonneur-bloqueur à ladite seconde fréquence (fb), et par conséquent obtention dudit second signal démodulé (40) à la sortie dudit échantillonneur-bloqueur (130).

7. Méthode selon l'une quelconque des revendications précédentes, **caractérisée en ce qu'**elle comporte également les étapes suivantes :
- démodulation de l'amplitude dudit signal auxiliaire (20), et par conséquent obtention d'un signal démodulé en amplitude correspondant (50) ;
- exécution d'une seconde comparaison dudit signal démodulé en amplitude (50) avec au moins un seuil prédéterminé (s3) ;
- production dudit signal d'alarme (60) également en fonction de ladite seconde comparaison.

8. Méthode selon la revendication 7, **caractérisée en ce qu'**elle comporte également les étapes suivantes :
- exécution d'une comparaison auxiliaire entre une amplitude du signal démodulé en amplitude (50) et au moins une valeur prédéterminée (s4) ;
- en fonction du résultat de ladite comparaison auxiliaire, pilotage d'une condition de veille à une condition de fonctionnement d'une unité de traitement (160) conçue pour recevoir lesdits signaux démodulés en phase (30, 40) et ledit signal démodulé en amplitude (50) et pour produire ledit signal d'alarme (60).

9. Méthode selon la revendication 8, **caractérisée en ce qu'**elle comporte également une étape de blocage de ladite unité de traitement (160) dans la condition de veille pendant la production dudit signal principal (10) .

10. Méthode selon l'une quelconque des revendications précédentes, **caractérisée en ce que** l'étape de production dudit signal principal (10) comprend les sous-étapes suivantes :
- production d'au moins deux signaux secondaires ayant une fréquence inférieure à ladite fréquence principale ;
- combinaison desdits signaux secondaires pour obtenir un signal ayant la même fréquence que ladite fréquence principale (f1).

11. Méthode selon la revendication 10, **caractérisée en ce que** lesdits signaux secondaires sont déphasés l'un par rapport à l'autre par un déplacement de phase non-nul.

12. Méthode selon les revendications 10 ou 11, **caractérisée en ce qu'**au moins l'un desdits signaux secondaires, et de préférence les deux signaux secondaires, a une fréquence égale à la moitié de la fréquence principale (f1).

13. Méthode selon la revendication 10, quand elle est jointe aux revendications 5 ou 6, **caractérisée en ce qu'**au moins l'un desdits signaux secondaires a la même fréquence que ladite première et/ou ladite seconde fréquence (fa, fb) et est utilisé pour activer ledit premier et/ou ledit second échantillonneurs-bloqueurs (120, 130).

14. Dispositif de détection d'intrusions dans des volumes clos, en particulier des habitacles de véhicules, comprenant :
- un générateur de rayons (100) pour produire un signal principal (10) à une fréquence principale (f1), dont la propagation se fait dans un volume ou espace clos prédéterminé ;
- un détecteur (110) pour détecter un signal auxiliaire (20) obtenu par interaction entre le signal principal (10) et ledit espace ;
- un démodulateur de phase (120, 130), qui est de préférence cohérent, pour démoduler la phase dudit signal auxiliaire (20) de préférence de façon cohérente, en échantillonnant ledit signal à une fréquence (fa, fb) inférieure à ladite fréquence principale (f1), pour obtenir au moins un signal démodulé correspondant (30, 40) ;
dans lequel ledit démodulateur de phase est configuré pour :
• démodulation dudit signal auxiliaire (20) à une première fréquence (fa), et par conséquent obtention d'un premier signal démodulé correspondant (30) ;
• démodulation dudit signal auxiliaire à une seconde fréquence (fb), et par conséquent obtention d'un second signal démodulé correspondant (40),
lesdits premier et second signaux démodulés étant déphasés mutuellement par un déplacement de phase non-nul prédéterminé (d), dont le déplacement de phase est de préférence égal à 90°,
au moins l'une desdites première et seconde fréquences (fa, fb) étant inférieure à ladite fréquence principale (f1) ;
- une unité de traitement (160) associée opérationnellement audit démodulateur (120, 130) pour exécuter une première comparaison dudit au moins un signal démodulé (30, 40) avec au moins un seuil prédéterminé (s1, s2) et pour produire un signal d'alarme (60) en fonction de ladite première comparaison.

15. Dispositif selon la revendication 14, **caractérisé en ce que** ledit démodulateur de phase (120, 130) comprend :
- un premier module d'échantillonnage (121) pour échantillonner ledit signal auxiliaire (20) à une première fréquence (fa), et pour obtenir ledit premier signal démodulé (30) ;
- un second module d'échantillonnage (131) pour échantillonner ledit signal auxiliaire (20) à une seconde fréquence (fb), et pour obtenir ledit second signal démodulé (40) ;
lesdits premier et second signaux démodulés (30, 40) étant déphasés l'un par rapport à l'autre par un déplacement de phase non-nul (d), dont le déplacement de phase (d) est de préférence égal à 90°,
au moins l'une desdites première et seconde fréquences (fa, fb) étant inférieure à ladite fréquence principale (f1).
